# EUROPÄISCHE PATENTANMELDUNG

(11) **EP 2 927 583 A1**
(43) Veröffentlichungstag der Anmeldung: **07.10.2015**
(21) Anmeldenummer: 15161308.0
(22) Anmeldetag: 27.03.2015
(51) Int. Cl.: F23D 14/02

(54) **KRAFT-WÄRME-KOPPLUNGSSYSTEM**

(30) Priorität: 03.04.2014 DE 102014206372
(71) Anmelder: Vaillant GmbH, 42859 Remscheid (DE)
(72) Erfinder: Pecka, Kai, 42855 Remscheid (DE); Wegner, Alexander, 45881 Gelsenkrichen (DE)
(74) Vertreter: Popp, Carsten

(57) **Zusammenfassung**

Die Erfindung betrifft ein Kraft-Wärme-Kopplungssystem zur Erwärmung einer Wärmesenke und zur Erzeugung elektrischer Energie mit einem Zusatzbrenner (8) für erhöhten Wärmebedarf. Um einerseits ein handelsübliches Heizgerät als Zusatzbrenner verwenden zu können und andererseits einen Wärmetauscher zur Nutzung der im Abgasstrom des Stromerzeugers enthaltenen Wärme einzusparen wird erfindungsgemäß vorgeschlagen, den Abgasstrom des Stromerzeugers (1) in den Zusatzbrenner-Brennereinlass (14) einzuleiten.

## Beschreibung

Die Erfindung betrifft ein Kraft-Wärme-Kopplungssystem zur Erwärmung einer Wärmesenke und zur Erzeugung elektrischer Energie. Ein gattungsgemäßes Kraft-Wärme-Kopplungssystem ist bekannt aus der Patentanmeldung WO 2004/102081. Dabei wird innerhalb des Kraft-Wärme-Kopplungssystems ein mit Brennstoff angetriebener Stromerzeuger verwendet, um Strom zu erzeugen. Die dabei anfallende Wärme kann für Heizzwecke genutzt werden. Kennzeichnend für ein Kraft-Wärme-Kopplungssystem ist der dezentrale Einsatz. Dies bedeutet, dass Kraft-Wärme-Kopplungssysteme für die thermische Versorgung eines Gebäudes eingesetzt werden. Der erzeugte Strom wird entweder innerhalb des Gebäudes genutzt oder in das öffentliche Stromnetz eingespeist. Da es auf der einen Seite unwirtschaftlich ist, ein für den maximalen Wärmebedarf ausgelegt ist und damit über den Jahresdurchschnitt überdimensioniertes Kraft-Wärme-Kopplungssystem zu betreiben, verwenden gattungsgemäße Kraft-Wärme-Kopplungssysteme einen Zusatzheizer, um kurzzeitig den maximalen Wärmebedarf zu decken.

Kraft-Wärme-Kopplungssysteme nach dem Stand der Technik nutzen für die im Abgas des Stromerzeugers enthaltene Wärme und für den Brenner zwei separate Wärmetauscher. In der WO 2004/102081 wird vorgeschlagen, die Abgase des Stromerzeuger das und die Abgase des Zusatzheizung durch einen gemeinsamen Wärmetauscher zu leiten.

Für die erste Variante kann als Zusatzheizer ein handelsübliches Heizgerät verwendet werden. Es weiß jedoch den Nachteil auf, dass insgesamt 2 Wärmetauscher eingesetzt werden müssen. Die zweite in der WO 2004/102081 beschriebene Variante nutzt zwar nur einen Wärmetauscher, es muss jedoch für den Zusatzheizer ein spezielles Heizgerät bereit gestellt werden.

Es ist daher Aufgabe der Erfindung, ein Kraft-Wärme-Kopplungssystem mit Zusatzheizer bereitzustellen, das für die Abgase des Stromerzeugers und für den Zusatzheizer einen gemeinsamen Wärmetauscher verwendet, aber gleichzeitig die Verwendung eines handelsüblichen Heizgeräts als Zusatzheizung ermöglicht.

Diese Aufgabe wird erfindungsgemäß durch ein Kraft-Wärme-Kopplungssystem gemäß dem unabhängigen Anspruch gelöst. Dabei wird das Abgas des Stromerzeugers bereits dem unverbrannten Brennstoff-Luft-Gemisch des Zusatzbrenners beigemischt. Dadurch ist es möglich, die im Abgas des Stromerzeugers enthaltene Wärme im Wärmetauscher des Zusatzbrenners zu nutzen. Dadurch ist nur ein einziger Wärmetauscher für beide Abgasströme erforderlich. Gleichzeitig kann für den Zusatzbrenner ein konventionelles Heizgerät verwendet werden, dass lediglich um die Möglichkeit einer Zuführung der Abgase des Stromerzeugers erweitert werden muss.

Weiterbildungen werden durch die abhängigen Ansprüche beschrieben.

Die Erfindung wird nun anhand der Figuren detailliert erläutert.

Es stellen dar:
Figur 1: Schema des erfindungsgemäßen Kraft-Wärme-Kopplungssystem.
Figur 2: Schema einer Variante des erfindungsgemäßen Kraft-Wärme-Kopplungssystems.
Figur 3: Schema einer weiteren Variante des erfindungsgemäßen Kraft-Wärme-Kopplungssystems.
Figur 4: Schema eines anderen Ausführungsbeispiels der Variante aus Figur 3.

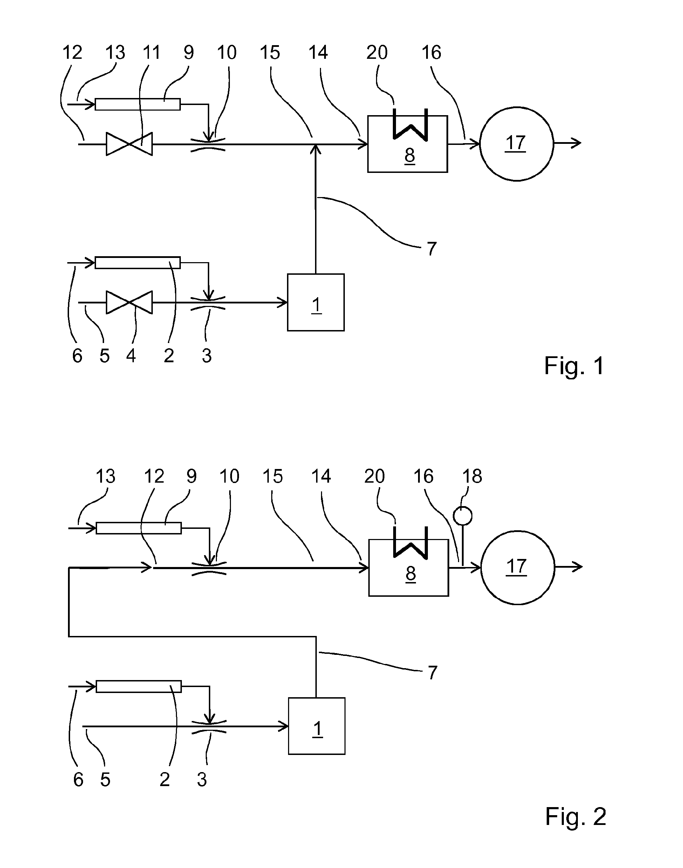

Die Figuren 1 bis 4 zeigen verschiedene Ausführungsvarianten des erfindungsgemäßen Kraft-Wärme-Kopplungssystem. Zum besseren Verständnis wird das Ausführungsbeispiel aus Figur 1 ausführlich beschrieben. Die Varianten in den Figuren 2 bis 4 werden nur in ihren Unterscheidungsmerkmale zu Figur 1 beschrieben.

In Figur 1 ist das Schema des erfindungsgemäßen Kraft-Wärme-Kopplungssystems dargestellt. Das Kraft-Wärme-Kopplungssystem besteht im wesentlichen aus einem Stromerzeuger 1, in dem gleichzeitig, wie aus dem Stand der Technik bekannt, Strom und Wärme produziert werden. Dabei kann es sich beispielsweise um einen Verbrennungsmotor mit äußerer oder innerer Verbrennung wie einen Stirlingmotor oder Ottomotor oder aber um eine Brennstoffzelle handeln. Im Falle eines Verbrennungsmotors ist dieser mit einem hier nicht dargestellten Generator verbunden, der die mechanische Energie des Motors in elektrische Energie gewandelt. Die Brennstoffzelle erzeugt die elektrische Energie direkt. Die Wärmeenergie wird für Heizzwecke eines Gebäudes oder zur Brauchwassererwärmung genutzt. Die elektrische Energie wird innerhalb des Gebäudes genutzt oder in das öffentliche Stromnetz eingespeist.

Zur Nutzung der Wärmeenergie wird die Abwärme des Stromerzeugers 1 direkt genutzt. Darüber hinaus wird auch die im Abgasstrom des Stromerzeugers enthaltene Wärme wie nachfolgend beschrieben genutzt.

Der brennstoffbetriebene Stromerzeuger 1 wird mit einem Brennstoff-Luft-Gemisch betrieben. Als Brennstoff wird beispielsweise Brenngas genutzt. Dazu wird über eine Stromerzeuger-Luftzufuhr 5 Luft und über eine Stromerzeuger-Brennstoffzufuhr 6 Brennstoff einer Stromerzeuger-Mischvorrichtung 3 zugeführt. Im Falle der Verwendung eines Brenngases wird durch eine Stromerzeuger-Gasarmatur 2 ein optimales Brennstoff-Luft-Mischverhältnis sichergestellt. Im Falle eines anderen Brennstoffs wird anstelle einer Gasarmatur eine andere Brennstoffregeleinrichtung verwendet. Das Brennstoff-Ludft-Gemisch wird zur oben beschriebenen Nutzung dem Stromerzeuger 1 zugeführt. Über eine Stromerzeuger-Abgasleitung 7 wird das dabei entstehende Abgas dem Zusatzbrenner 8 zugeführt.

Für das Brennstoff-Luft-Gemisch für den Zusatzbrenner 8 wird über eine Zusatzbrenner - Luftzufuhr 12 Luft und über eine Zusatzbrenner -Brennstoffzufuhr 13 Brennstoff einer Zusatzbrenner-Mischvorrichtung 10 zugeführt. Im Falle der Verwendung eines Brenngases wird durch eine Zusatzbrenner-Gasarmatur 9 ein optimales Brennstoff-Luft-Mischverhältnis sichergestellt.

In der in Figur 1 dargestellten Ausführungsvariante wird das Abgas über die Stromerzeuger-Abgasleitung 7 mittels eines Abgaseingangs 15 dem Zusatzbrenner 8 vor dem Zusatzbrenner-Brennereinlass und hinter der Zusatzbrenner-Mischvorrichtung 10 zugeführt. Dadurch kann die im Abgas des Stromerzeugers 1 enthaltene Wärmemenge in dem Wärmetauscher 20 des Zusatzbrenners 8 genutzt werden. Ein Fördergebläse 17 fördert den gemeinsamen Abgasstrom, so dass über die Stromerzeuger-Regeleinrichtung 4 und die Zusatzbrenner-Regeleinrichtung 11 die Massenströme der Luft für den Stromerzeuger 1 und den Zusatzbrenner 8 vor dem Abgaseingang 15 eingestellt werden können.

Wird aufgrund eines geringen Wärmebedarfs der Zusatzbrenner nicht benötigt, so wird der Wärmetauscher des Zusatzbrenners 8 ausschließlich durch die Abgase des Stromerzeugers 1 erwärmt.

Der Vorteil des erfindungsgemäßen Kraft-Wärme-Kopplungssystem so ist, dass als Zusatzbrenner ein handelsübliches Heizgerät verwendet werden kann, dass lediglich um einen Abgaseingang 15 ergänzt ist. Ein weiterer Vorteil ist, dass durch die Kühlung der Flamme des Zusatzbrenners durch die Zufuhr des auf ein relativ geringes Temperaturniveau erwärmten Abgases des Stromerzeugers eine geringere Schadstoffemission erreicht wird. Darüber hinaus wird durch die Vorwärmung des Brennstoff-Luft-Gemisches eine bessere Flammenstabilität im Zusatzbrenner erreicht.

In der in Figur 2 gezeigten Variante ist die Stromerzeuger-Abgasleitung 7 direkt verbunden mit der Zusatzbrenner-Luftzufuhr. Was den Massenstrom der Luftzufuhr betrifft, sind somit Stromerzeuger 1 und Zusatzbrenner 8 direkt hintereinander geschaltet. Dies bedingt, dass der Stromerzeuger 1 mit einem Luftüberschuss betrieben wird, wenn der Zusatzbrenner 8 in Betrieb ist. Daher müssen die Stromerzeuger-Gasarmatur 2 und die Zusatzbrenner-Gasarmatur 9 so koordiniert werden, dass in der Zusatzbrenner-Abgasleitung 15 kein unverbrannter Brennstoff enthalten ist. Dies kann durch einen Abgassensor 18 sichergestellt werden.

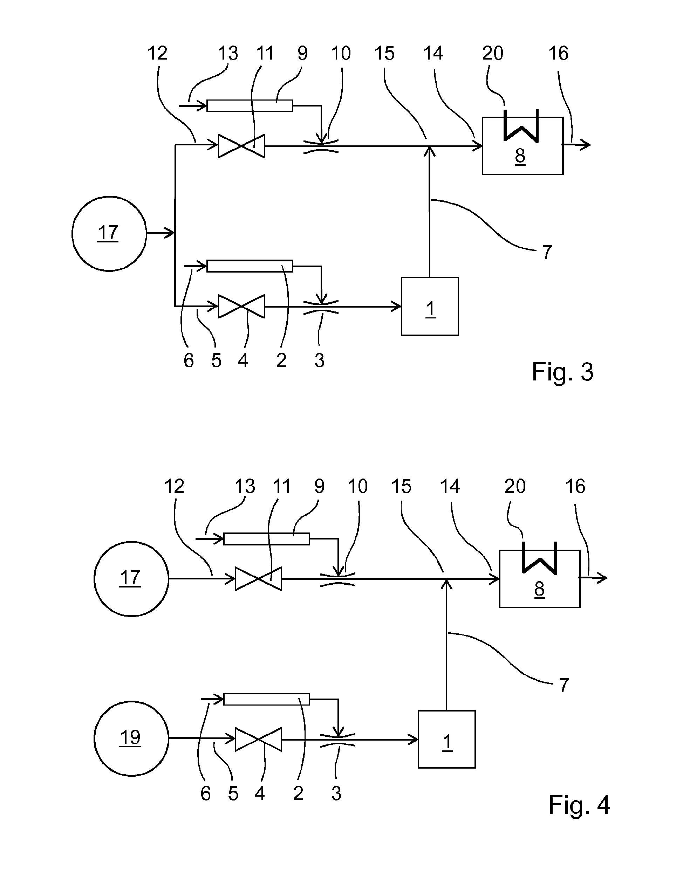

Die in den Figuren 3 und 4 gezeigten Varianten unterscheiden sich von der in Figur 1 gezeigten Variante dadurch, dass das Fördergebläse 17 nicht mit der Zusatzbrenner-Abgasleitung 16, sondern mit der Stromerzeuger-Luftzufuhr 5 und der Zusatzbrenner-Luftzufuhr 12 verbunden ist. Im Fall der Figur 3 ist dies ein gemeinsames Fördergebläse 17. In der Figur 3 sind dies 2 separate Fördergebläse 17 und 19.

### Bezugszeichenliste

- 1: Stromerzeuger
- 2: Stromerzeuger-Gasarmatur
- 3: Stromerzeuger-Mischvorrichtung
- 4: Stromerzeuger-Regeleinrichtung
- 5: Stromerzeuger - Luftzufuhr
- 6: Stromerzeuger - Brennstoffzufuhr
- 7: Stromerzeuger-Abgasleitung
- 8: Zusatzbrenner
- 9: Zusatzbrenner-Gasarmatur
- 10: Zusatzbrenner-Mischvorrichtung
- 11: Zusatzbrenner-Regeleinrichtung
- 12: Zusatzbrenner-Luftzufuhr
- 13: Zusatzbrenner-Brennstoffzufuhr
- 14: Zusatzbrenner-Brennereinlass
- 15: Abgaseingang
- 16: Zusatzbrenner- Abgasleitung
- 17: Fördergebläse
- 18: Abgassensor
- 19: Zweites Fördergebläse
- 20: Wärmetauscher

## Patentansprüche

1. Kraft-Wärme-Kopplungssystem zur Erwärmung einer Wärmesenke und zur Erzeugung elektrischer Energie, umfassend einen mit Brennenergie betriebenen Stromerzeuger (1) mit einer Stromerzeuger-Abgasleitung (7), und umfassend einen Zusatzbrenner (8) zur Erzeugung zusätzlicher Wärme mit einer Zusatzbrenner-Luftzufuhr (12), einer Zusatzbrenner-Brennstoffzufuhr (13), einer Zusatzbrenner-Mischvorrichtung (10) und einem Zusatzbrenner-Brennereinlass (14), **dadurch gekennzeichnet, dass** die Stromerzeuger-Abgasleitung (7) mittels eines Abgaseingangs (15) so mit dem Zusatzbrenner-Brennereinlass (14) verbunden ist, dass im Betrieb das Abgas des Stromerzeugers (1) dem unverbrannten Brennstoff-Luft-Gemisch des Zusatzbrenners (8) beigemischt wird.

2. Kraft-Wärme-Kopplungssystem nach Anspruch 1, wobei der Abgaseingang (15) zwischen Zusatzbrenner-Mischvorrichtung (10) und Zusatzbrenner-Brennereinlass (14) angeordnet ist.

3. Kraft-Wärme-Kopplungssystem nach Anspruch 2, wobei der Zusatzbrenner (8) eine Rezirkulationseinrichtung zur teilweisen Rückführung des Abgases des Zusatzbrenners von der Zusatzbrenner-Abgasleitung (16) zum Zusatzbrenner-Brennereinlass (14) umfasst und wobei der Abgaseingang (15) an der Rezirkulationseinrichtung unmittelbar vor dem Zusatzbrenner-Brennereinlass (14) angeordnet ist.

4. Kraft-Wärme-Kopplungssystem nach Anspruch 1, wobei der Abgaseingang (15) an der Zusatzbrenner-Luftzufuhr (12) angeordnet ist.

5. Kraft-Wärme-Kopplungssystem nach Anspruch 4, wobei die Zusatzbrenner-Luftzufuhr (12) ausschließlich durch die Stromerzeuger-Abgasleitung (7) gespeist wird.

6. Kraft-Wärme-Kopplungssystem nach einem der Ansprüche 1 bis 5, wobei an der Zusatzbrenner- Abgasleitung (16) ein Fördergebläse (17) vorgesehen ist.

7. Kraft-Wärme-Kopplungssystem nach einem der Ansprüche 1 bis 4, wobei an der Zusatzbrenner-Luftzufuhr (12) und an der Stromerzeuger-Luftzufuhr (5) je ein Fördergebläse (17, 19) vorgesehen ist.

8. Kraft-Wärme-Kopplungssystem nach einem der Ansprüche 1 bis 4, wobei an der Zusatzbrenner-Luftzufuhr (12) und an der Stromerzeuger-Luftzufuhr (5) ein gemeinsames Fördergebläse (17) vorgesehen ist.
